# EUROPÄISCHE PATENTSCHRIFT

(11) **EP 0 968 563 B1**
(45) Veröffentlichungstag und Bekanntmachung des Hinweises auf die Patenterteilung: **02.04.2003**
(21) Anmeldenummer: 98960998.7
(22) Anmeldetag: 09.10.1998
(51) Int. Cl.: H02K 15/04

(54) **VERFAHREN UND VORRICHTUNG ZUM HERSTELLEN VON WELLENWICKLUNGEN FÜR ELEKTRISCHE MASCHINEN**
METHOD AND DEVICE FOR PRODUCING WAVE WINDINGS FOR ELECTRICAL MACHINES
PROCEDE ET DISPOSITIF DE PRODUCTION D'ENROULEMENTS ONDULES POUR MACHINES ELECTRIQUES

(30) Priorität: 23.12.1997 DE 19757742; 18.04.1998 DE 19817304
(43) Veröffentlichungstag der Anmeldung: 05.01.2000
(73) Patentinhaber: ROBERT BOSCH GMBH, 70442 Stuttgart (DE)
(72) Erfinder: KIRSCHNER, Roland, D-71299 Wimsheim (DE)
(86) Internationale Anmeldenummer: DE9802987
(87) Internationale Veröffentlichungsnummer: WO99034499

(56) Entgegenhaltungen:
- WO-A-98/25444
- US-A- 4 512 376
- US-A- 4 857 787
- PATENT ABSTRACTS OF JAPAN vol. 098, no. 011, 30. September 1998 & JP 10 164805 A (HITACHI LTD), 19. Juni 1998

## Beschreibung

### Stand der Technik

Die Erfindung geht aus von einem Verfahren und einer Vorrichtung zum Herstellen von Wellenwicklungen für elektrische Maschinen nach der US-PS 4,857,787. Dort wird die Wicklung einer jeden Phase eines Drehstromgenerators zunächst auf einer Trommel bzw. einem Polygon mit der erforderlichen Windungszahl aufgewickelt und sternförmig verformt. Danach wird die Wicklung in zwei Hälften aufgeklappt, so daß die beiden Hälften nebeneinanderliegen. Dann werden die beiden Hälften derart verschwenkt, daß in die Lücken der sternförmigen Schleifen bzw. Welle einer Wicklungshälfte jeweils eine Schleife der anderen Wicklungshälfte liegt. Danach wird die so vorbereitete Wellenwicklung der einen Phase in bekannter Weise axial in die Schlitze eines Statorbleckpaketes eingezogen. In gleicher Weise werden anschließend die Wicklung der zweiten und der dritten Phase des Drehstromgenerators nacheinander vorgeformt, geteilt, zueinander versetzt übereinandergeschwenkt und in das Statorblechpaket eingezogen.

Das Aufteilen der Phasenwicklung in je zwei Teile sowie das Gegeneinanderverschwenken ist bei diesem Verfahren relativ aufwendig und durch Handhabungsautomaten für eine Großserienherstellung nur mit einer Vielzahl von störanfälligen Fertigungsschritten zu realisieren.

Mit der vorliegenden Lösung soll die automatische Großserienherstellung von zweigeteilten Wellenwicklungen mit gegeneinander versetzten Wellen vereinfacht und verbessert werden.

### Vorteile der Erfindung

Das erfindungsgemäße Verfahren und die dafür vorgesehene Vorrichtung zum Herstellen von zueinander versetzten Wellenwicklungshälften nach den kennzeichnenden Merkmalen des Patentanspruchs 1 und 3 hat den Vorteil, daß bereits auf einer Wickelglocke die beiden durchgehend hintereinander gewickelten Wicklungshälften in einen zueinander entgegengesetzten Wickelsinn gewickelt und sternförmig vorgeformt werden. Über eine zwischen beiden Wicklungshälften geformte Wickelschlaufe können anschließend die beiden Wicklungshälften gegeneinander um eine Polteilung nach links oder rechts verdreht werden, so daß dann die sternförmig ausgebildeten Wellen der beiden Wicklungshälften zueinander um eine Polteilung versetzt sind. Nachfolgend wird die so vorgeformte Wellenwicklung in bekannter Weise in ein Statorblechpaket eines Generators eingezogen. In gleicher Weise werden alle drei Phasenwicklungen des Drehstromgenerators als Wellenwicklungen einzeln hergestellt und nacheinander in das Statorblechpaket eingezogen. Auf diese Weise können die Wellenwicklungen mit zueinander versetzten Wicklungshälften auf einfache und sichere Weise in wenigen Arbeitsschritten an einer Wickelstation hergestellt und an eine Einziehstation übergeben werden.

### Zeichnung

Einzelheiten der Erfindung sind in einem Ausführungsbeispiel in der Zeichnung dargestellt und in der nachfolgenden Beschreibung näher erläutert. Es zeigen:

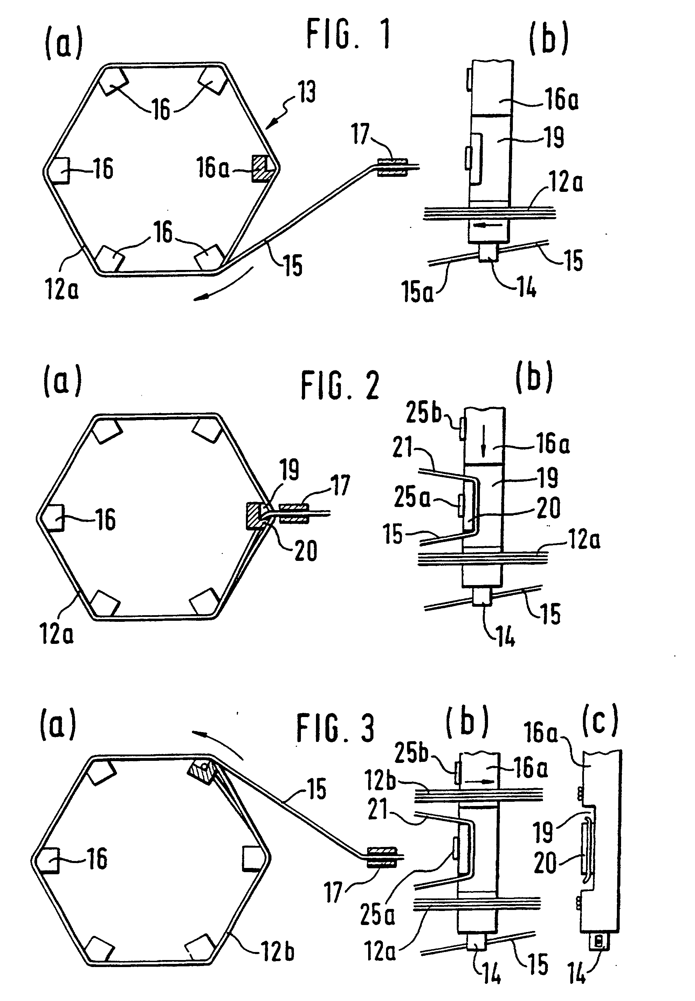

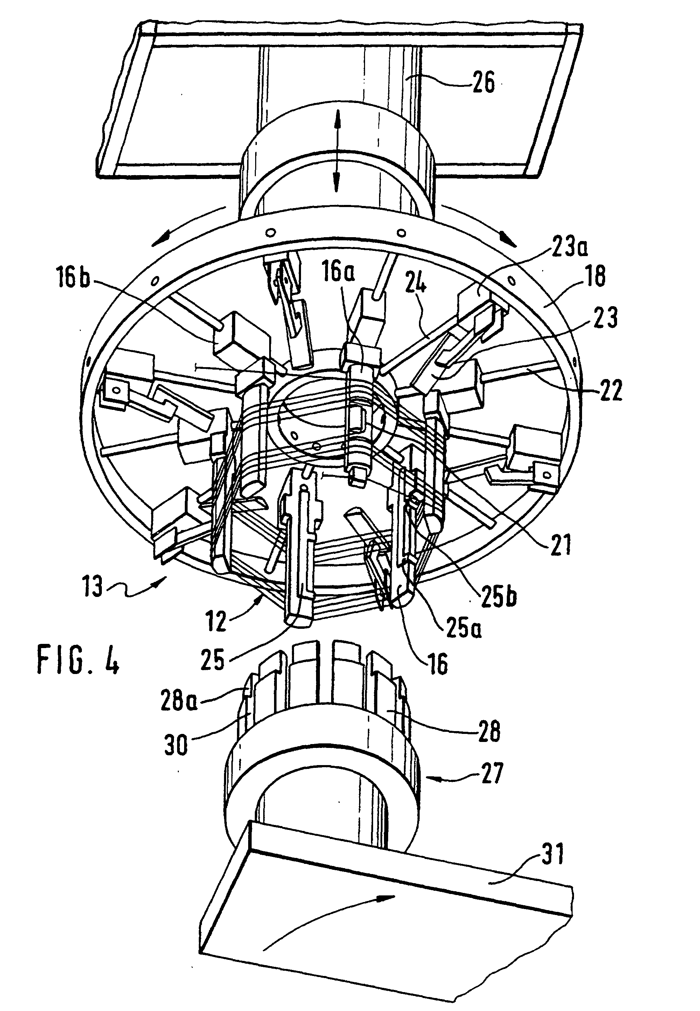

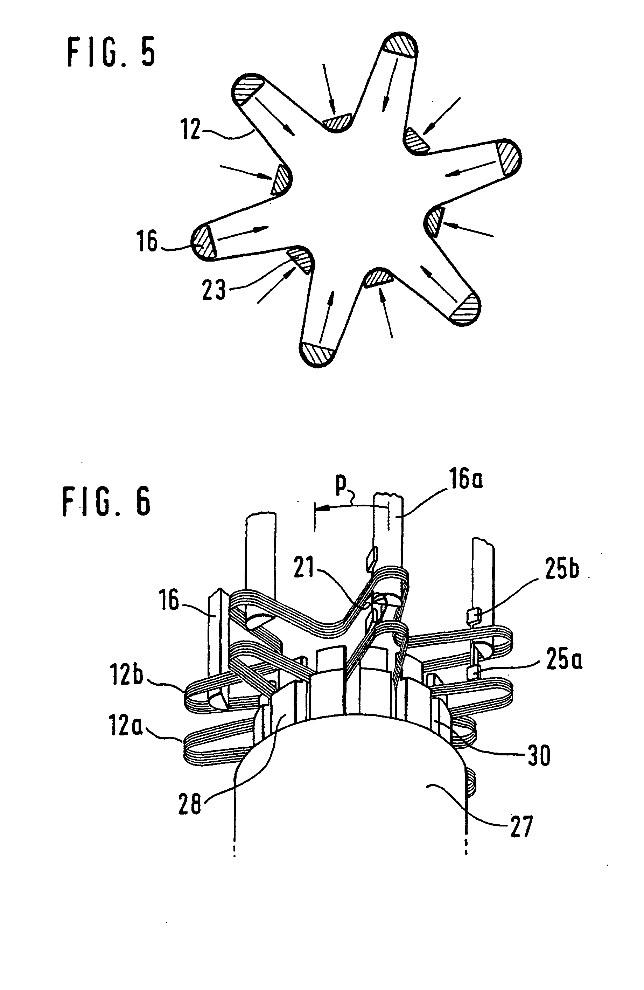

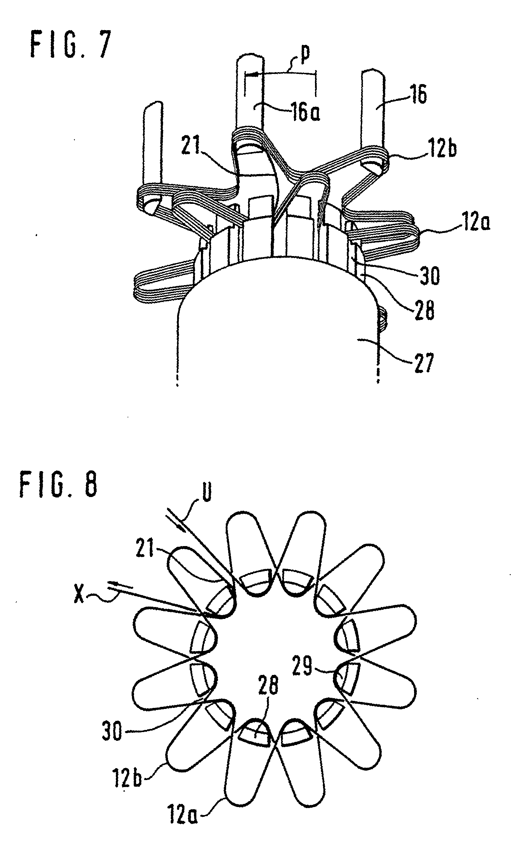

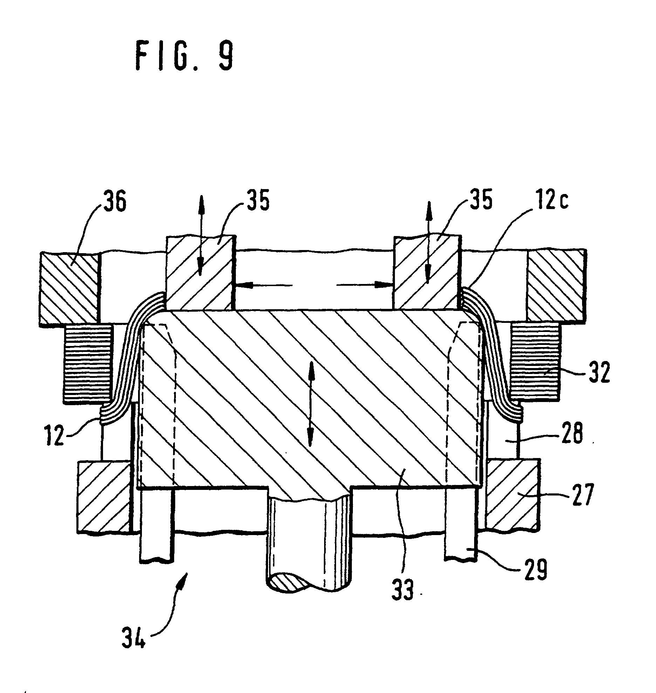

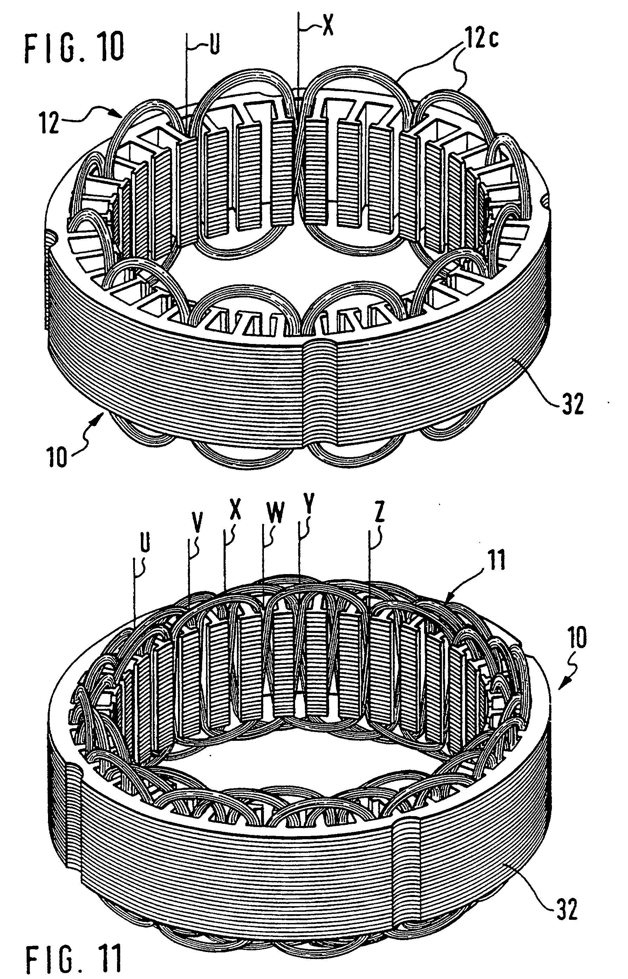

Figur 1 das Wickeln der ersten Spulenhälfte in schematischer Darstellung, Figur 2 das Wickeln der Schlaufe mit Umkehr der Wickelrichtung, Figur 3 das Wickeln der zweiten Wicklungshälfte; Figur 4 zeigt die Wickelvorrichtung mit einem darunter angeordneten Einziehwerkzeug, Figur 5 zeigt die sternförmig vorgeprägte Wellenwicklung, Figur 6 zeigt die Wellenwicklung, deren eine Hälfte in das Einziehwerkzeug abgestreift ist, Figur 7 zeigt die Verdrehung der oberen Wicklungshälfte, Figur 8 zeigt die fertige Wellenwicklung im Einziehwerkzeug, Figur 9 zeigt das Einziehwerkzeug im Längsschnitt nach dem Einziehen der Wellenwicklung, Figur 10 zeigt ein Statorblechpaket mit der einen geteilten Wellenwicklung und Figur 11 den fertigen Stator mit den drei Phasenwicklungen.

### Beschreibung des Ausführungsbeispiels

Zur Herstellung eines Stators 10 gemäß Figur 11, mit einer Dreiphasen-Wellenwicklung 11, wird jede der drei Phasenstränge durch eine Wellenwicklung 12 mit zueinander versetzten Wicklungshälften 12a und 12b auf einer Wickelvorrichtung 13 gemäß Figur 4 vorgefertigt. Die Figuren 1 bis 3 zeigen in schematischer Weise die Herstellung einer solchen Wellenwicklung 12 aus Figur 10. Ein Drahtklemmer 14 hält ein Ende 15a eines Wicklungsdrahtes 15 gemäß Figur 1b am unteren Ende eines Formbacken 16 fest. Sechs solcher Formbacken sind gemäß Figur 1a sternförmig in der Wickelvorrichtung 13 angeordnet. Der Wicklungsdraht 15 wird dabei über eine Drahtdüse 17 von einer nicht dargestellten Vorratstrommel entnommen. Die Formbacken 16 sind in einer Wickelglocke 18 der Wickelvorrichtung 13 gemäß Figur 4 radial beweglich angeordnet. Zur Herstellung der ersten Wicklungshälfte 12a werden die Formbacken 16 im Uhrzeigersinn mit der Wickelglocke 18 gedreht, so daß die erste Wicklungshälfte 12a mit vier vollständigen Windungen in Polygonform entsteht.

Nun wird die Wickelvorrichtung angehalten, wobei der Formbacken 16a in Höhe der Drahtdüse 17 stehenbleibt. Aus Figur 2 ist erkennbar, daß der Formbacken 16a in seinem vorderen Bereich eine segmentförmige Aussparung 19 aufweist, in der vorn ein axial verlaufender stegförmiger Schlaufenzieher 20 stehenbleibt. Die Drahtdüse 17 wird nun an diesen Schlaufenzieher herangeführt und der Wicklungsdraht 15 wird von der Drahtdüse 17 nunmehr um den Schlaufenzieher 20 von unten nach oben herumgeführt, wobei die Formbacken 16 und 16a mitsamt der Wickelglocke 18 axial nach unten verschoben werden.

Jetzt wird die Wickelglocke 18 entgegengesetzt zum Uhrzeigersinn langsam weitergedreht und die Drahtdüse 17 wird wieder in ihre Außenposition zurückgefahren. Dabei entsteht am Schlaufenzieher 20 eine Wickelschlaufe 21, wie dies in Figur 2b erkennbar ist.

Gemäß Figur 3 wird nun die zweite Wicklungshälfte 12b in entgegengesetzter Wickelrichtung durch eine entsprechende Umdrehungszahl der Wickelglocke 18 hergestellt.

Figur 4 zeigt die Wickelvorrichtung 13 zur Herstellung der Wellenwicklung 12 in raumbildlicher Darstellung. Dort ist erkennbar, daß auf der Unterseite der Wickelglocke 18 die sechs Formbacken 16 in polygoner Anordnung auf radial nach innen verlaufenden Achsen 22 verschiebbar angeordnet sind, wobei der Antrieb 16b pneumatisch, über Bowdenzüge oder über andere Mittel versorgt wird. Zwischen den Formbacken 16 sind jeweils Formhebel 23 angeordnet, die ebenfalls über je einen Antrieb 23a auf radial angeordneten Achsen 24 durch Pneumatik, Bowdenzug oder dgl. verschiebbar sind. Die sechs Formhebel 23 sind dabei in ihrer äußeren Position nach innen hochgeschwenkt in Figur 4 dargestellt, so daß sie beim Wickeln der ersten und zweiten Wicklungshälfte 12a und 12b nicht in den Wickelbereich ragen können. Auf der Rückseite der Formbacken 16 ist jeweils ein Abstreifer 25 axial verschiebbar angeordnet, welcher mit einem Abstreifarm 25a oberhalb der ersten Wicklungshälfte 12a und mit einem weiteren Abstreifarm 25b oberhalb der zweiten Wicklungshälfte 12b vorsteht, wie dies auch in den Figuren 1b bis 3b erkennbar ist. Die Wickelglocke 18 ist über einen Antrieb 26 in Richtung der Pfeile sowohl in beide Drehrichtungen drehbar als auch in Axialrichtung verschiebbar.

Unterhalb der Wickelglocke 18 befindet sich ein Einziehwerkzeug 27 mit einer Aufnahmekrone 28 und dazu radial innenliegend Einziehnadeln 29 (in Figur 8 erkennbar). Zwischen den Einziehnadeln 29 ist die Aufnahmekrone 28 mit Längsschlitzen 30 versehen. Das Einziehwerkzeug 27 sitzt auf einem verschwenkbaren Werkzeugtisch 31, der gegebenenfalls auch höhenverstellbar ist.

In einem weiteren Verfahrensschritt wird nunmehr gemäß Figur 5 die obere und untere Wicklungshälfte 12a und 12b gleichzeitig sternförmig verformt, in dem die sechs Formbacken 23 zunächst von ihrem Antrieb 23a senkrecht herausgeklappt und dann über die Achsen 24 radial nach innen bewegt werden, wie dies durch Pfeile in Figur 5 angedeutet ist. Gleichzeitig werden dabei die Formbacken 16 auf ihren Achsen 22 nachgebend radial nach innen verschoben, was ebenfalls in Figur 5 durch entsprechende Pfeile angedeutet ist. Beide Wicklungshälften 12a und 12b sitzen nun mit Abstand übereinander sternförmig auf den Formbacken 16 und den Formhebeln 23.

In weiteren Schritten werden nun die Formbacken 16 um 3 mm in Pfeilrichtung gemäß Figur 5 bewegt, die Spule 12 entspannt, die Drahtklemmung 14 geöffnet und dann gemäß Figur 6 mit den Abstreifern 25 die untere Wicklungshälfte 12a von den Formbacken 16 abgestreift, wobei sie mit ihren sternförmigen Schenkeln in Längsschlitze 30 der Aufnahmekrone 18 des Einziehwerkzeugs 27 aufgenommen wird. Die obere Wicklungshälfte 12b wird dabei ebenfalls von den Abstreifern 25b mit nach unten verschoben, bleibt jedoch noch im unteren Bereich der Formbacken. Obere und untere Wicklungshälfte 12a und 12b sind nunmehr nur über die Wicklungsschlaufe 21 miteinander verbunden.

In dem nachfolgenden Verfahrensschritt wird nun die Wickelglocke 18 um eine Polteilung p der zwölfpoligen Wellenwicklung 12, d.h. um 30° in Richtung des Pfeiles nach links zurückgedreht, so daß nunmehr die sternförmigen Wellen der beiden Wicklungshälften 12a und 12b gegeneinander versetzt sind. Die Wicklungsschlaufe 21 wird dabei nach links umgelegt, so daß sie ebenfalls den Verlauf der oberen Wicklungshälfte 12b folgt.

In einem weiteren Verfahrensschritt wird nun auch die obere Wicklungshälfte 12b mit dem Abstreifer 25 von den Formbacken 16 abgestreift und in die Längsschlitze 30 an der Aufnahmekrone 28 des Einziehwerkzeugs eingelegt. Wie Figur 8 zeigt, liegen nunmehr die Wellen der beiden Wicklungshälften 12a und 12b symmetrisch zueinander versetzt in den Längsschlitzen 30 der Aufnahmekrone 28. In diesem Zustand werden die Abstreifer 25 wieder angehoben. Die Formhebel werden nun wieder in die äußere Position zurückgefahren und schwenken dabei in ihre Ausgangsposition gemäß Figur 4 zurück und die Wickelglocke 18 geht nach oben. Auf dem oberen Teil 28a (Figur 4) der Aufnahmekrone 28 wird ein Statorblechpaket 32 fixiert. Dann schwenkt der Werkzeugtisch 31 zu einer in Figur 9 schematisch dargestellten Einziehstation 34. Dort wird in bekannter Weise die vorgeformte Wellenwicklung 12 in die Nuten des Statorblechpaketes 32 mittels eines Einziehstempels 33 eingezogen und die oberen Wickelköpfe 12c werden mittels Nachdrückbacken 35 in die aus Figur 10 erkennbare Position radial nach außen gedrückt. Außerdem wird in dieser Station auch noch ein Nutenverschluß vorgenommen. Von den beiden Wicklungshälften werden auf diese Weise beidseitig über den Umfang des Statorblechpaketes 32 sich abwechselnde Wickelköpfe 12c gebildet. Dabei wird das Statorblechpaket 32 von einem Paketspannring 36 auf der Aufnahmekrone 28 gehalten.

In der zuvor beschriebenen Weiswe wird nun eine weitere Wellenwicklung an der Wickelvorrichtung nach Figur 4 hergestellt und sternförmig verformt. Anschließend werden die beiden Wicklungshälften in der beschriebenen Weise um eine Polteilung gegeneinander verdreht und dann vom Einziehwerkzeug aufgenommen und schließlich in das Statorblechpaket neben der ersten Wellenwicklung in die dafür vorgesehenen Nuten eingezogen. In gleicher Weise erfolgt auch die Herstellung und Einziehung der dritten Wellenwicklung, so daß schließlich gemäß Figur 11 ein fertiger Stator mit einer Drei-Phasen-Wellenwicklung 11 entstanden ist. Dort sind die Anfänge und Enden der drei Phasen der Drehstromwellenwicklung mit U, V, W und X, Y und Z bezeichnet.

Bei diesen Wellenwicklungen mit jeweils zueinander gegenläufig versetzten Wellenwicklungshälften läßt sich der Nutenfüllfaktor im Statorblechpaket 32 gegenüber einteiligen Wellenwicklungen bis zu 10 % erhöhen. Bei Generatoren mit größeren Leistungen kann der Nutenfüllfaktor auch noch dadurch erhöht werden, daß anstelle eines Wicklungsdrahtes mit relativ großem Querschnitt zwei oder mehrere Wicklungsdrähte mit entsprechend kleinerem Querschnitt zueinander parallel gewickelt und verschaltet werden.

Das Verschwenken der beiden Wicklungshälften 12a und 12b gegeneinander in der Wickelvorrichtung nach Figur 4 kann in gleicher Weise auch durch Verdrehen der oberen Wicklungshälfte 12b gegenüber der unteren 12a nach rechts erfolgen. In diesem Fall würde sich die Wickelschlaufe 21 nicht gemäß Figur 7 zur oberen Wicklungshälfte 12b hin umlegen, sondern zu der unteren Wicklungshälfte 12a. Damit in diesem Fall die untere Wicklungshälfte 12a nicht länger und die obere 12b nicht kürzer wird, müssen Wickelanfang der unteren Wicklungshälfte 12a und Wickelende der oberen Wicklungshälfte 12b entsprechend positioniert werden. In gleicher Weise können die beiden Wicklungshälften 12a und 12b alternativ auch in entgegengesetzter
Wickelrichtung - also die erste Hälfte rechtsherum und die zweite Hälfte linksherum - auf den Formbacken aufgewickelt werden. Der Schlaufenzieher muß in diesem Fall auf der rechten Seite am Formbacken 16a angeordnet werden. Bei einer Anordnung des Schlaufenziehers 21 in der Mitte des Formbackens 16a kann die Wickelvorrichtung für beide Wickelrichtungen verwendet werden.

In jedem Fall bleibt der Stromfluß in den Wicklungsabschnitten der beiden Wicklungshälften innerhalb der Nuten des Blechpaketes durch die Verdrehung um 30°, d.h. um eine Polteilung stets gleich.

Da sich am Nutaustritt die Wellenwicklung in beide Richtungen in zwei Hälften teilt, kreuzen sich an den Spulenköpfen die drei Wicklungsstränge immer nur mit der halben Anzahl der Leitungsdrähte einer benachbarten Phasenwicklung. Dies führt gegenüber einer ungeteilten Wicklung zu einem flacheren Wickelkopf mit gleichmäßiger Drahtführung, bei einer Strömungs-Geräuschsenkung und besserer Kühlung.

## Patentansprüche

1. Verfahren zum Herstellen von Wellenwicklungen für elektrische Maschinen, insbesondere für den Stator von Drehstromgeneratoren, wobei jede der drei Wicklungsphasen (12) aus einer in zwei Hälften (12a, 12b) aufgeteilten Wellenwicklung (12) gebildet wird, die aus mindestens einem durchgehenden Wicklungsdraht (15) kreisförmig bzw. polygon gewickelt und zu einer gewellten Sternform umgeformt wird, indem sodann die beiden Wicklungshälften (12a, 12b) um eine Polteilung (p) gegeneinander versetzt und schließlich gemeinsam in die Nuten eines Statorblechpakets (32) eingezogen werden, wodurch beidseitig am Statorblechpaket über dessen Umfang sich abwechselnde Wickelköpfe (12c) der beiden Wicklungshälften ausgebildet werden, **dadurch gekennzeichnet, daß** zunächst die erste Wicklungshälfte (12a) in eine erste Wickelrichtung kreisförmig bzw. polygonal gewickelt und danach der durchgehende Wicklungsdraht (15) in einer Wickelschlaufe (21) in die entgegengesetzte Wickelrichtung überführt wird, daß sodann die zweite Wicklungshälfte (12b) in die entgegengesetzte Richtung gewickelt wird, daß ferner beide Wicklungshälften (12a und 12b) vorzugsweise gleichzeitig, gleichförmig zu einem Stern verformt werden und daß schließlich die beiden Wicklungshälften um eine Polteilung (p) gegeneinander verdreht werden und dabei die Wickelschlaufe (21) zwischen den beiden Wicklungshälften (12a und 12b) in die Sternform mit übergeht.

2. Verfahren nach Anspruch 1, **dadurch gekennzeichnet, daß** auf einer in beide Drehrichtungen antreibbaren Wickelglocke (18) mit am Umfang verteilten, radial bewegbaren Formbacken (16) zunächst die erste Wicklungshälfte (12) auf die Formbacken (16) gewickelt, dann der Wicklungsdraht (15) über einen vorzugsweise an einem Formbacken (16a) angeordneten Schlaufenzieher (20) zu einer Verbindungsschlaufe (21) für die entgegengesetzte Wickelrichtung geformt wird, daß anschließend axial versetzt die zweite Wicklungshälfte (12b) mit Drehrichtungswechsel auf die Formbacken (16) gewickelt wird, sodann beide Wicklungshälften gleichzeitig mittels von außen nach radial innen bewegte Formhebel (23) gleichmäßig zu einem gewellten Stern verformt werden, daß danach eine Wicklungshälfte (12a) von der Wickelglocke (18) in einer Aufnahme, vorzugsweise einem Einziehwerkzeug (27) abgelegt und nun die Wickelglocke (18) mit der verbliebenen anderen Wicklungshälfte (12b) um eine Polteilung (p) vorzugsweise in die erste Drehrichtung verdreht und schließlich auch diese von der Wickelglocke (18) abgestreift und in der Aufnahme oberhalb der ersten Wicklungshälfte (12a) abgelegt wird.

3. Vorrichtung zum Herstellen von Wellenwicklungen für elektrische Maschinen, insbesondere für den Stator von Drehstromgeneratoren nach dem Verfahren gemäß Anspruch 1, **dadurch gekennzeichnet, daß** auf einer in beide Drehrichtungen antreibbaren Wickelglocke (18) mit am Umfang verteilten, radial bewegbaren Formbacken (16) eine erste Wicklungshälfte (12a) aufwickelbar ist, daß ferner ein Schlaufenzieher (20) vorgesehen ist, über den der Wicklungsdraht (15) am Ende der ersten Wicklungshälften (12a) in einer Wickelschlaufe (21) in die zweite Wicklungshälfte (12) überführbar und danach in entgegengesetzter Richtung auf die Formbacken (16) aufwickelbar ist, und daß zwischen den Formbacken (16) jeweils von außen radial nach innen verschiebbare Formkörper, insbesondere Formhebel angeordnet sind, mittels derer die beiden Wicklungshälften vorzugsweise gleichzeitig sternförmig zu formen sind.

4. Vorrichtung nach Anspruch 3, **dadurch gekennzeichnet, daß** im Bereich der Formbacken (16) für die beiden Wicklungshälften (12a und 12b) Abstreifer (25) axial verschiebbar angeordnet sind, mit denen zunächst die untere Wicklungshälfte (12a) abzustreifen ist, um sie gegen die oberen Wicklungshälfte (12b) um eine Polteilung (p) zu verdrehen, so daß die Wickelschlaufe (21) in die Sternform mit übergeht.

5. Vorrichtung nach Anspruch 3 oder 4, **dadurch gekennzeichnet, daß** an mindestens einem der Formbacken (16) ein Schlaufenzieher (20) in Form eines axialen Steges in einer segmentförmigen Aussparung (19) an der Vorderseite des Formbacken (16a) angeordnet ist.

## Revendications

1. Procédé de fabrication d'enroulement ondulé pour des machines électriques notamment pour le stator d'alternateur,
chacun des trois enroulements de phase (12) étant formé par un enroulement ondulé (12) divisé en deux moitiés (12a, 12b), cet enroulement étant obtenu avec au moins un fil d'enroulement continu (15), bobiné sur une forme de cercle ou d'un polygone, et mis en forme d'étoile, ondulée, décalant l'une par rapport à l'autre les deux moitiés d'enroulement (12a, 12b) d'une division polaire (p) et enfin en les serrant ensemble dans les rainures d'un paquet de tôles de stator (32), si bien que de chaque coté du paquet de tôles de stator, sur sa périphérie, on aura des têtes d'enroulement alternées (12c) des deux moitiés d'enroulements,
**caractérisé en ce que**
on enroule tout d'abord la première moitié d'enroulement (12a) dans une première direction de bobinage suivant une forme circulaire ou polygonale puis on fait passer le fil de bobinage continu (15) sous la forme d'une boucle de bobinage (21) dans le sens d'enroulement opposé,
puis on enroule la seconde moitié de bobinage (12b) dans la direction opposée,
et ensuite on donne aux deux moitiés d'enroulement (12a, 12b) de préférence simultanément, la même déformation en étoile et enfin
on tourne les deux moitiés d'enroulement l'une par rapport à l'autre d'une division polaire (p), la boucle de bobinage (21) entre les deux moitiés d'enroulement (12a, 12b) s'intégrant dans la forme en étoile.

2. Procédé selon la revendication 1,
**caractérisé en ce que**
sur une cloche de bobinage (18) susceptible d'être entraînée dans les deux sens de rotation et ayant des mors de formage (16) répartis à sa périphérie, mobiles radialement, on enroule d'abord la première moitié de bobinage (12) sur les mors de formage (16),
puis on forme sur un extracteur de boucles (20) prévu de préférence sur l'un des mors de formage (16a), une boucle de liaison (21) avec le fil de bobinage (15) pour le sens de bobinage opposé,
ensuite on enroule la seconde moitié d'enroulement (12b) avec décalage axial et changement de sens d'enroulement sur les mors de formage (16),
ensuite on donne aux deux moitiés d'enroulement une forme en étoile ondulée régulièrement, à l'aide de leviers de formage (23) déplacés radialement de l'extérieur vers l'intérieur, puis on dépose une moitié d'enroulement (12a) de la cloche de bobinage (18) dans un moyen de réception de préférence un outil d'insertion (27) et ensuite on tourne la cloche de bobinage (18) sur laquelle reste l'autre moitié d'enroulement (12b), d'une division polaire (p) de préférence dans le premier sens de rotation, et finalement on racle également cette moitié d'enroulement de la cloche de bobinage (18) et on la dépose dans le moyen de réception au-dessus de la première moitié de bobinage (12a).

3. Dispositif pour réaliser des enroulements ondulés pour des machines électriques notamment pour le stator d'alternateur selon le procédé de la revendication 1,
**caractérisé en ce que**
sur une cloche de bobinage (18) susceptible d'être entraînée dans les deux sens de rotation, ayant des mors de formage (16) répartis à sa périphérie et mobiles radialement, on enroule une première moitié d'enroulement (12a), ce dispositif comportant en outre un extracteur de boucles (20) sur lequel à la fin de la première moitié d'enroulement (12a), le fil de bobinage (15) passe en une boucle d'enroulement (21) sur la seconde moitié d'enroulement (12b) et ensuite est enroulé dans le sens opposé sur les mors de formage (16), et
entre les mors de formage (16), se trouvent des organes de formage coulissant radialement de l'extérieur vers l'intérieur en particulier des leviers de formage à l'aide desquels les deux moitiés de bobinages peuvent être mises en forme d'étoile de préférence simultanément.

4. Dispositif selon la revendication 3,
**caractérisé en ce qu'**
au niveau des mors de formage (16), pour les deux moitiés d'enroulement (12a, 12b) on a des racleurs (25) coulissant axialement à l'aide desquels on peut racler tout d'abord la moitié d'enroulement inférieure (12a) pour la tourner d'une division polaire (p) par rapport à la moitié d'enroulement supérieure (12b), pour que la boucle d'enroulement (21) soit intégrée dans la forme en étoile.

5. Disposition selon les revendications 3 ou 4,
**caractérisé en ce que**
sur au moins l'un des mors de formage (16) il est prévu un extracteur de boucles (20) sous la forme d'une entretoise axiale dans une cavité (19) en forme de segment du coté avant du mors de formage (16a).

## Claims

1. Method for producing wave windings for electrical machines, in particular for the stator of three-phase generators, with each of the three winding phases (12) being formed from a wave winding (12) which is subdivided into two halves (12a, 12b) and which is wound from at least one continuous winding wire (15) in a circular or polygonal shape and is shaped to form a corrugated star shape, in that the two winding halves (12a, 12b) are then offset with respect to one another by one pole pitch (p) and are finally introduced jointly into the slots in a laminated stator core (32), as a result of which alternating end windings (12c) of the two winding halves are formed on both sides of the laminated stator core over its circumference, **characterized in that**, first of all, the first winding half (12a) is wound in a circular or polygonal shape in a first winding direction, and the continuous winding wire (15) is then transferred in a winding loop (21) in the opposite winding direction, so that the second winding half (12b) is then wound in the opposite direction, **in that**, furthermore, both winding halves (12a and 12b) are shaped, preferably at the same time, uniformly to form a star and **in that**, finally, the two winding halves are rotated through one pole pitch (p) with respect to one another, with the winding loop (21) between the two winding halves (12a and 12b) in the process merging into the star shape.

2. Method according to Claim 1, **characterized in that**, first of all, the first winding half (12) is wound onto the moulding jaws (16) on a winding bell (18) which can be driven in both rotation directions and has moulding jaws (16) which can move radially and are distributed around the circumference, the winding wire (15) is then shaped via a loop puller (20), which is preferably arranged on one moulding jaw (16a), to form a connecting loop (21) for the opposite winding direction, **in that** the second winding half (12b) is then wound, with an axial offset, with a change in the rotation direction onto the moulding jaws (16) and the two winding halves are then shaped at the same time by means of moulding levers (23), which are moved radially inwards from the outside, uniformly to form a corrugated star, **in that** one winding half (12a) is then placed from the winding bell (18) in a holder, preferably a pull-in tool (27), and the winding bell (18) with the remaining other winding half (12b) is now rotated through one pole pitch (p), preferably in the first rotation direction, and, finally, this is also stripped off the winding bell (18) and is placed in the holder above the first winding half (12a).

3. Apparatus for producing wave windings for electrical machines, in particular for the stator of three-phase generators in accordance with the method according to Claim 1, **characterized in that** a first winding half (12a) can be wound on a winding bell (18), which can be driven in both rotation directions and has moulding jaws (16) which can move radially and are distributed on the circumference, **in that**, furthermore, a loop puller (20) is provided, via which the winding wire (15) at the end of the first winding halves (12a) can be transferred in a winding loop (21) into the second winding half (12) and can then be wound onto the moulding jaws (16) in the opposite direction, and **in that** moulding bodies, in particular moulding levers, which can be moved radially inwards from the outside, are in each case arranged between the moulding jaws (16), by means of which the two winding halves can be shaped in the form of a star, preferably at the same time.

4. Apparatus according to Claim 3, **characterized in that** strippers (25) which can be moved axially are arranged in the area of the moulding jaws (16) for the two winding halves (12a and 12b), by means of which the lower winding half (12a) can be stripped off first of all, in order to rotate it through one pole pitch (p) with respect to the upper winding half (12b), so that the winding loop (21) also merges into the star shape.

5. Apparatus according to Claim 3 or 4, **characterized in that**, on at least one of the moulding jaws (16), a loop puller (20) in the form of an axial web is arranged in a segment-shaped cut-out (19) on the front face of the moulding jaw (16a).
